(19) **Europäisches Patentamt**

**European Patent Office**

**Office européen des brevets**

(11) **EP 1 401 961 B1**

(12) **EUROPEAN PATENT SPECIFICATION**

(45) Date of publication and mention
of the grant of the patent:
**27.07.2005 Bulletin 2005/30**

(21) Application number: **02721734.8**

(22) Date of filing: **11.04.2002**

(51) Int Cl.⁷: **C08L 101/00**

(86) International application number:
**PCT/US2002/011605**

(87) International publication number:
**WO 2002/083794 (24.10.2002 Gazette 2002/43)**

(54) **LONG SOLIDIFIED HOLLOW THERMOPLASTIC ARTICLES**

LÄNGLICHE, VERFESTIGTE THERMOPLASTISCHE HOHLKÖRPER

LONGS ARTICLES THERMOPLASTIQUES CREUX SOLIDIFIES

(84) Designated Contracting States:
**DE FR GB IT NL**

(30) Priority: **12.04.2001 US 833456**

(43) Date of publication of application:
**31.03.2004 Bulletin 2004/14**

(73) Proprietor: **E.I. DU PONT DE NEMOURS AND
COMPANY
Wilmington, Delaware 19898 (US)**

(72) Inventors:
• **PHILIPPOZ, Jean-Michel
CH-1247 Prangins (CH)**
• **JAKOB, Jean-Pierre
F-74140 Ballasion (FR)**
• **BOYDELL, Philip
F-01630 Challex (FR)**
• **VERCESI, Giorgio, Patrizio
F-74240 Gaillard (FR)**

(74) Representative: **Morf, Jan Stefan, Dr. Dipl.-Chem.
Abitz & Partner,
Poschingerstrasse 6
81679 München (Bogenhausen) (DE)**

(56) References cited:
**EP-A- 0 505 162       GB-A- 2 217 720
US-A- 6 068 922**

• **DATABASE WPI Section Ch, Week 199344
Derwent Publications Ltd., London, GB; Class
A32, AN 1993-347963 XP002216293 & JP 05
254004 A (SEKISUI CHEM IND CO LTD) , 5
October 1993 (1993-10-05)**

**Description**

This invention relates to solidified hollow thermoplastic articles, in particular long and/or large articles, and to processes and compositions for making such articles.

BACKGROUND

Thermoplastic polymers are known to be useful in the preparation of solidified hollow articles such as bottles. These kinds of articles are generally made by blow molding. The blow molding process generally begins with producing a polymer melt in a horizontal extruder. In extrusion blow molding the polymer melt is extruded vertically through a die tooling, forming a tube of molten resin called a "parison". This parison tube is captured by a mold, pinched at the top and bottom, inflated, and cooled while subjected to internal gas pressure. The mold is then opened, yielding a solidified, hollow part.

During blow molding, it is critical that the parison not sag, that is to say elongate under its own weight, before it is captured by the mold. The capability of the parison to be stable and not to sag can be evaluated by its melt strength.

In addition, the industry continues to demand longer solidified hollow articles, in particular blow molded articles, due to the tendency towards part and function integration for a reduced overall system cost. The blow molding of long parts requires specific rheological properties, in particular a closely controlled high melt strength to avoid unwanted sagging.

For many types of thermoplastic polymers, special grades or formulations have been developed that have a high melt strength. Various approaches are known to achieve this goal, including the use of very high molecular weight polymer, the formation of branched molecular structures, and the use of viscosity modifiers. But these approaches present the disadvantages of being directed to a specific polymer family. Moreover, they require optimization for each case.

Other approaches propose the use of specific additives. US Patent Nos. 5,096,964; 4,914,156; and 5,408,000 describe blow moldable compositions comprising thermoplastic polymers and a fibrillatable fluoropolymer resin. EP 0 505 162 discloses blow moldable compositions comprising polyamides and glass fibers. However, none of these references discloses or suggests the use of short aramid fibers as an additive.

Nevertheless, it still remains problematic to obtain long and/or large solidified hollow thermoplastic articles from any thermoplastic composition. It is a problem to provide a parison for the blow molding of such very long articles, that is based on thermoplastic polymers, that has a high melt strength, a high stability, and that has little tendency to sag.

Now, it has been found that the melt strength of thermoplastic compositions can be substantially increased by the incorporation therein of specific short aramid fibers.

According to our invention, long and/or large solidified hollow articles, and especially long and/or large blow molded articles, can be obtained by the blow molding of thermoplastic compositions having improved melt strength.

SUMMARY OF INVENTION

Included in our invention are:

solidified hollow articles made from at least one thermoplastic composition comprising a thermoplastic polymeric matrix and short aramid fibers, from blends of such thermoplastic compositions, or from blends containing such thermoplastic compositions;
processes for making solidified hollow articles from such compositions and blends;
methods of improving the melt strength of a polymer composition comprising the step of adding an effective amount of short aramid fibers to the polymer composition;
methods for making blow molded solidified hollow articles from polymer compositions which are not suitable for blow molding; and
compositions for use in blow molding comprising at least one thermoplastic polymeric matrix and short aramid fibers.

These and other aspects of our invention are described further in the detailed description of preferred embodiments.

DETAILED DESCRIPTION OF PREFERRED EMBODIMENTS

Reference is first made to preferred thermoplastic compositions of our invention.
Preferred thermoplastic compositions comprise:

(A) a thermoplastic polymeric matrix, and

(B) short aramid fibers.

These thermoplastic compositions provide a high melt strength, a high parison stability, and little tendency to sag, enabling the successful blow molding of very long and/or large articles, which could not be achieved with prior art thermoplastic formulations.

The thermoplastic polymeric matrix of a thermoplastic composition comprises at least one thermoplastic polymer.

"Thermoplastic polymer", as used herein, includes homopolymers, copolymers and terpolymers of polyacetals, polyamides, polyesters, polyurethanes, polyethylene terephthalate glycols, polycarbonates, polyvinyl chlorides, polyacrylates, poly(phenylene ethers), polysulfones, polyolefins, polystyrenes, ethylene tetrafluoroethylene, copolymers of esters and ethers, copolymers of styrene and acrylonitrile, copolymers of acrylonitrile butadiene styrene (ABS), blends of polypropylene and ethylene propylene diene monomer (PP/EPDM), rubber modified thermoplastic polymers, and mixtures or blends thereof.

These thermoplastic polymers are known to the art. Preferred thermoplastic polymers include homopolymers and copolymers of polyacetals, polyamides, polyesters, polyolefins, and mixtures or blends thereof.

Preferred polyamides are well-known and include those described in U.S. Pat. Nos. 5, 408, 000; 4, 174, 358; 3, 393, 210; 2, 512, 606; 2, 312, 966 and 2, 241, 322, each of which is hereby incorporated by reference in its entirety. Included among these are semi-crystalline and amorphous resins having molecular weight of at least 500 which may be produced for example by condensation polymerization of equimolar amounts of saturated dicarboxylic acids containing 4 to 12 carbon atoms with diamines, by ring opening polymerization of lactams, or by copolymerization of polyamides with other components. Preferred polyamides include nylon 6, nylon 6,6, nylon 6,9, nylon 6,10, nylon 11, nylon 12, polyether amides, semi-aromatic polyamides, and blends or mixtures thereof.

Preferred polyesters include polyesters based on polyethylene terephthalate homopolymers, polybutylene terephthalate homopolymers, polyethylene terephthalate/polybutylene terephthalate copolymers, copolyetheresters, copolyesteresters, and blends and mixtures thereof.

Preferred polyolefins include homopolymers and copolymers of alkene containing 2 to 8 carbon atoms, such as polyethylenes, polypropylenes, and polybutylenes, blends and mixtures thereof.

The thermoplastic polymers are usually present in the thermoplastic polymeric matrix in an amount of about 40 weight % to 100 weight %, relative to the weight of the thermoplastic polymeric matrix.

The thermoplastic polymeric matrix may optionally include additives including without limitation plasticizers, stabilizers, antioxidants, ultraviolet ray-absorbers, hydrolytic stabilizers, anti-static agents, dyes or pigments, fillers, fire-retardants, lubricants, reinforcing agents such as glass fiber and flakes, processing aids, for example release agents, and/or mixtures thereof.

These additives may be present in the thermoplastic polymeric matrix preferably in an amount of 0 weight % to about 70 weight %, more preferably in an amount of about 0.1 weight % to 70 weight %, relative to the weight of the thermoplastic polymeric matrix.

The thermoplastic polymeric matrix is present preferably in an amount of about 70 weight % to about 99.99 weight %, more preferably in an amount of about 75 weight % to about 99.9 weight %, even more preferably in an amount of about 80 weight % to about 99 weight %, relative to the weight of the thermoplastic polymeric matrix and short aramid fibers only in the thermoplastic composition.

By "short aramid fibers" is meant aramid fibers or particulate materials of small diameter, preferably less than or equal to 150 microns, having some fibrous nature, having an average length distribution of 0.1 to 8 mm, preferably 0.7 to 3 mm, and a Canadian Standard Freeness of less than or equal to 500 ml, preferably less than or equal to 400 ml. Freeness is determined by Tappi test T227m50. The data obtained from this test are expressed as the familiar Canadian Standard Freeness numbers, which represent the number of ml (milliliters) of water which drain from the slurry under specified conditions. The short aramid fibers are preferably fibrillated. Such fibrillated aramid fibers include aramid pulp which is made in accord with the teaching of U.S. Pat. Nos. 5,028,372 and 5,532,059, each of which is hereby incorporated by reference in its entirety, or by refining aramid floc with an original length of 0.1 to 8 mm. For purposes of this invention, short aramid fibers also include particulate materials known as "fibrids" and particularly aramid fibrids made, for example, in accord with the teachings of U.S. Pat. Nos. 2,999,788 and 3,018,091, each of which is hereby incorporated by reference in its entirety. The short aramid fibers can be coated or treated with agents in order to alter handling behavior, adhesion properties, static charge retention, and the like.

The surface area of the short aramid fibers according to the invention is preferably greater than, or equal to, 3 $m^2/g$, more preferably greater than, or equal to, 6 $m^2/g$, this surface area being measured by nitrogen absorption according to the BET method, on a Streohlein Area Meter (1-point nitrogen adsorption method DIN66132). The short aramid fibers of the invention preferably show a high aspect ratio, preferably as little as 10 to as much as 1000, the aspect ratio being the ratio of length to diameter of the fiber.

By "aramid" is meant a polyamide wherein at least 85% of the amide (-CO-NH-) linkages are attached directly to two aromatic rings.

Para-aramids are the primary polymers in the short fibers of this invention and poly(p-phenylene terephthalamide) (PPD-T) is the preferred para-aramid. By PPD-T is meant the homopolymer resulting from mole-for-mole polymerization of p-phenylene diamine and terephthaloyl chloride and, also, copolymers resulting from incorporation of small amounts of other diamines with the p-phenylene diamine and of small amounts of other diacid chlorides with the terephthaloyl chloride.

Examples of such para-aramid short fibers are the products sold under the tradename Kevlar® in the form of a pulp by E. I. du Pont de Nemours and Company (Wilmington, Delaware, United States of America).

Meta-aramids may also be used in the short fibers of this invention and poly(m-phenyleneisophthalamide) (MPD-I) is the preferred meta-aramid. By MPD-I is meant the homopolymer resulting from mole-for-mole polymerization of m-phenylene diamine and isophthaloyl chloride and, also, copolymers resulting from incorporation of small amount of other diamines with the m-phenylene diamine and of small amounts of other diacid chlorides with the isophthaloyl chloride.

Examples of such meta-aramid short fibers are the products sold under the tradename Nomex® in the form of fibrids by E. I. du Pont de Nemours and Company.

The short aramid fibers used in the present invention may be a mixture of para-aramid fibers and meta-aramid fibers.

The short aramid fibers may be introduced and dispersed in the thermoplastic polymeric matrix by any appropriate method, including mixing or extrusion.

According to another preferred embodiment of our invention, the short aramid fibers are premixed with a polymer in order to obtain a masterbatch, prior to their incorporation into the thermoplastic polymeric matrix. The masterbatch may be prepared according to the process described in US Patent No. 5,830,395, which is hereby incorporated by reference in its entirety. The polymer of the masterbatch may be of the same nature as the thermoplastic polymeric matrix or compatible therewith. Compatible, as used herein, means that the polymer of the masterbatch and the thermoplastic polymeric matrix can be thoroughly mixed without adverse chemical reaction or degradation.

The short fibers are present preferably in an amount of about 0.01 weight % to about 30 weight %, more preferably from about 0.1 weight % to about 25 weight %, even more preferably from about 1 weight % to about 20 weight %, relative to the weight of the thermoplastic polymeric matrix and short aramid fibers only in the thermoplastic composition.

Thermoplastic compositions of our invention may optionally include additives including plasticizers, stabilizers, antioxidants, ultraviolet ray-absorbers, hydrolytic stabilizers, anti-static agents, dyes or pigments, fillers, fire-retardants, lubricants, reinforcing agents such as glass fiber and flakes, processing aids, for example release agents, and/or mixtures thereof.

Thermoplastic compositions of our invention are preferably prepared by extrusion using a single or twin-screw machine with a screw configuration and operating parameters adapted to the thermoplastic polymer used.

Our invention also includes solidified hollow articles made from these thermoplastic compositions, blends thereof, and blends containing such thermoplastic compositions and blends, and processes for making these articles.

EP-A-0 505 162 discloses a hollow blow molded article of 300mm or more in length made of a thermoplastic composition comprising polyamide and 1-200 (10-100) parts per weight of aramid fibers.

Such solidified hollow articles may be prepared by any suitable extrusion, injection molding, or blow molding process.

Preferably, they are prepared through a blow molding process as follows :

    1) providing a thermoplastic composition comprising a thermoplastic polymeric matrix and short aramid fibers,
    2) blow molding the thermoplastic composition to form a blow molded article.

In a preferred embodiment, step 2) of the process above comprises the steps of:

    a) forming a preform comprising the thermoplastic composition provided in step 1),
    b) inserting the preform into a mold, and
    c) blowing a gas through the preform to form a blow molded article.

"Preform", as used herein, includes a parison, for example a parison as formed in most blow molding processes by extruding a heat-softened thermoplastic tube and pinching off the bottom, as well as a solid preform obtained by injection molding which is used in particular in the stretch blow molding process. The preform is then inserted into a mold and a gas is blown through the preform to form a blow molded article.

In addition to extrusion and injection blow molding processes, the blow molding processes of our invention include stretch blow molding, suction blow molding, coextrusion blow molding, sequential coextrusion blow molding and combinations of two or more of these processes. When a stretch blow molding process is used, the solid preform above can be stored and shipped to another plant or machine. The solid preform can further be re-heated to a temperature close to the melting point of the material and stretch blown to its final shape. When a suction blow molding process is used, the mold is closed and the preform moves by suction through the mold cavity, generally with the help of an additional flow of gas. When a coextrusion blow molding process is used, the preform is made with two or more concentric layers of different materials. When a sequential coextrusion blow molding process is used, the preform is made of different materials alternating along its length.

Solidified hollow articles of our invention show preferably no seam along their length. They preferably include articles which can be obtained through blow molding as well as articles obtained through injection molding such as the solid preform above. These articles may have one end opened or both ends opened. Solidified hollow articles of invention include preferably blow molded articles, and include without limitation tubes, either straight or bent, bottles, pipes, containers, bellows, air-springs.

The melt strength of a polymer composition (which includes thermoplastic polymeric matrixes, thermoplastic compositions, thermoplastic polymers, as described above, and/or blends thereof) can be improved by the addition of an effective amount of short aramid fibers. As used herein, "effective amount" means the minimum amount of short aramid fibers, which when added to the polymer composition, improves the melt strength of the resulting composition, compared to the melt strength of the polymer composition before the addition of the effective amount of short aramid fibers. This amount may vary depending on the nature of the polymer composition. Effective amounts can be readily determined by one skilled in the art.

Preferably, the improvement of the melt strength of a polymer composition is characterized by the improvement of its sag ratio, said sag ratio being measured according to the procedure described in the Examples below.

In one preferred embodiment, in the case of a polymer composition from which no blow molded articles can be obtained, an effective amount of short aramid fibers is preferably the minimum amount of short aramid fibers, which when added to the polymer composition, provides to the resulting composition a sag ratio of preferably at least 0.41. Such a sag ratio would make it possible to extrude a vertical parison of 40 cm or more at the recommended processing temperature without excessive sagging, thus allowing the blow molding of articles of 40 cm or more.

In another preferred embodiment, in the case of a polymer composition already suitable for blow molding, an effective amount of short aramid fibers is preferably the amount of short aramid fibers, which when added to the polymer composition, provides to the resulting composition a sag ratio of preferably at least 0.75. Such a sag ratio would make it possible to extrude a vertical parison of 1 meter or more at the recommended processing temperature without excessive sagging, thus allowing the blow molding of articles of 1 meter or more.

In another preferred embodiment, the effective amount of short aramid fibers added to a polymer composition is preferably at least 0.01 weight %, more preferably from about 0.1 weight % to about 25 weight %, and more preferably from about 1 weight % to about 20 weight %, relative to the weight of only the actual polymer or polymers and short aramid fibers in the resulting composition.

In other aspects of our invention, the addition of short aramid fibers can impart sufficient melt strength for blow molding to a wide range of polymer compositions that were not originally designed for blow molding. When added to a polymer composition that is already suitable for blow molding, the short aramid fibers can impart increased melt strength and reduced sagging, thereby enabling the production of longer blow-molded articles. For instance, it is now possible to produce blow molded thermoplastic articles having a length greater than or equal to 40 cm, preferably greater than or equal to 1 meter. Blow molded articles of our invention have a good surface aspect, show no melt fracture, and are homogeneous.

EXAMPLES

Preferred embodiments of our invention are described and compared in the following Examples. Our invention, however, is not limited to these Examples. In these Examples, all amounts are given in parts by weight relative to the total weight of the thermoplastic composition.

The blow moldable compositions below were prepared by mixing the components in the described proportions and melt blending the resulting mixtures on a 30 mm diameter twin screw extruder. Extrusion conditions were selected in accordance with the recommended processing conditions for each thermoplastic polymeric matrix. Temperature settings of the extruder were generally set as constant in all zones from the feed hopper to the die, at a value 20-30°C below the temperature desired for the extrudate. The extrudate was pulled into strands, cooled in a water bath and pelletized.

The blow molding evaluations were done on a Battenfeld Fischer machine equipped with a screw having 60 mm diameter and 1200 mm length. Barrel and die temperatures were set in accordance with the recommended processing conditions for each thermoplastic polymeric matrix. The melt temperature was measured with a hand-probe inserted in the parison, and is given in the tables below. With the screw turning at a constant speed of 31 rpm, the parison was extruded through a circular die with an outer diameter of 23.8 mm and a core pin diameter of 18.4 mm.

During its descent from the die towards the floor, the advance of the parison was measured in the following way: the parison was cut at the die exit and this defined the time as zero, then the time was recorded when the lowest point of the parison moved by 0.2 m ($T_{0.2}$), and then when it has moved by 1 m ($T_1$). Four such measurements were made and the average times were used to extract the sag ratio (SR), which is defined as :

$$SR = 0.2\, T_1 / T_{0.2}$$

A thermoplastic polymeric matrix with no sag would have a constant parison drop speed, hence a sag ratio equal to one. Therefore, the closer the SR is to the value 1, the higher is the melt strength of the composition as a parison. This is especially important in order to obtain long blow molded articles.

Description of ingredients:

Materials used in the Examples set forth below were as follows, identified by the respective trademarks and trade designations:

Masterbatch :

M : masterbatch of 61% para-aramid pulp in thermoplastic polyolefin (ethylene copolymer), commercially available from E. I. du Pont de Nemours and Company under the tradename Kevlar®, Merge 1K-1239. The short para-aramid fibers of this pulp were poly(p-phenylene terephthalamide) fibers with an average fiber length of 0.7 to 0.8 mm, a BET surface area of 8 to 9 $m^2$/g and a Canadian Standard Freeness of about 215 ml.

Polymers :

P1 : Hytrel® 5586 : is a high-viscosity thermoplastic polyester elastomer with 55 nominal Shore D hardness, commercially available from E. I. du Pont de Nemours and Company.

P2 : Delrin® 100P : high-viscosity polyacetal homopolymer having a melt flow rate of 2.4 dg/min (190°C, 2.16kg), commercially available from E. I. du Pont de Nemours and Company

P3 : Hostalen® GF4760 : high-density polyethylene with a melt flow rate of 1.5dg/min (190°C, 5kg), commercially available from Elenac.

P4 : Surlyn® 7930 : ethylene/methacrylic acid copolymer partially neutralized with lithium ions, commercially available from E. I. du Pont de Nemours and Company.

P5 : Santoprene® 101-87 : is a general-purpose thermoplastic rubber with 87 Shore A hardness, commercially available from Advanced Elastomer Systems.

P6 : Magnum® 3504 : general purpose ABS resin with a melt flow rate of 5 dg/min (220°C, 10kg), commercially available from Dow Plastics.

P7 : Crastin® BM6450XD BK560 : polybutylene terephthalate composition commercially available from E.I. du Pont de Nemours and Company.

P8 : Melinar® Laser+ food-grade polyethylene terephthalate composition having an intrinsic viscosity of 0.82 dl/g, commercially available from DuPont Sabanci Polyesters.

P9 : Durethan® B35 : high-viscosity polyamide 6 resin commercially available from Bayer AG (Leverkeusen, Germany).

P10 : Zytel® 7300 NC010 : polyamide 6 resin commercially available from E. I. du Pont de Nemours and Company.

P11 : Tenac® 7520 : polyacetal copolymer having a melt flow rate of 30 dg/min (190°C, 2.16kg), commercially available from Asahi-Kasei (Tokyo, Japan).

P12 : Tefzel® 280 : melt-processible ethylene-tetrafluoroethylene copolymer with a melt flow rate of 3.5dg/min (297°C, 5kg), commercially available from E. I. du Pont de Nemours and Company

P13 : Zytel® E103HSL NC010 : heat-stabilized polyamide 6,6 resin commercially available from E. I. du Pont de Nemours and Company.

P14 : Zytel® 70G35HSL BK39B : heat-stabilized polyamide 6,6 resin reinforced with 35% glass fibers, commercially available from E. I. du Pont de Nemours and Company.

P15 : Zytel® EFE1093 NC010 : high viscosity polyamide 6,6 resin, commercially available from E. I. du Pont de Nemours and Company.

Comparative Fibers:

CF1 : Teflon® 637-N : polytetrafluoroethylene (PTFE) fine fibrillatable powder, commercially available from E. I. du Pont de Nemours and Company.

CF2 : thermoplastic polyester elastomer containing 20% Kevlar® floc, under the form of rod-like fibers having a surface area of less than 0.3 m$^2$/g and a Canadian Standard Freeness greater than or equal to 700 ml.

Example 1 :

For each thermoplastic polymer P1 to P10, the respective sag ratio (SR) of a composition comprising 100% of the specified polymer (Comparative Composition) was measured and compared to that of a composition comprising 97% of the polymer and 3% of masterbatch M (Preferred Composition). Each Preferred Composition therefore comprised 1.8% of Kevlar® pulp, and 98.2% of a thermoplastic polymeric matrix consisting of 1.2% of ethylene copolymer and 97% of the respective thermoplastic polymer.

The results are collected in the following Table 1.

TABLE 1

| Polymer | Melt temperature [°C] | SR (Comparative Composition) | SR (Preferred Composition) |
|---------|------------------------|------------------------------|----------------------------|
| P1 | 230 | 0.31 | 0.73 |
| P2 | 210 | 0.40 | 0.83 |
| P3 | 190 | 0.65 | 0.82 |
| P4 | 190 | 0.45 | 0.68 |
| P5 | 220 | 0.72 | 0.93 |
| P6 | 220 | 0.67 | 0.93 |
| P7 | 240 | 0.61 | 0.89 |
| P8 | 270 | 0.35 | 0.49 |
| P9 | 235 | 0.30 | 0.65 |
| P10 | 235 | 0.29 | 0.52 |

These results show that the incorporation of short aramid fibers into a thermoplastic composition improved the sag ratio of said composition. In consequence, the melt strength of the composition was also improved.

For all Preferred Compositions, articles with a length over 40 cm were obtained. In the cases of Comparative Compositions where the thermoplastic polymer was P1, P2, P8, P9 or P10, no blow molded articles could be obtained at all.

Example 2 :

For each thermoplastic polymer P11 to P13, the respective sag ratio of a composition comprising 100% of the specified polymer (Comparative Composition) was measured and compared to that of a composition comprising 94% of the polymer and 6% of masterbatch M (Preferred Composition). Each Preferred Composition therefore comprised 3.6% of Kevlar® pulp, and 96.4% of a thermoplastic polymeric matrix consisting of 2.4% of ethylene copolymer and 94% of the respective thermoplastic polymer.

The results are collected in the following Table 2.

TABLE 2

| Polymer | Melt temperature [°C] | SR (Comparative Composition) | SR (Preferred Composition) |
|---|---|---|---|
| P11 | 210 | 0.27 | 0.75 |
| P12 | 300 | 0.60 | 0.92 |
| P13 | 275 | 0.36 | 0.60 |

These results show that the incorporation of short aramid fibers into a thermoplastic composition improved the sag ratio of the composition. In consequence, the melt strength of the composition was also improved.

For all Preferred Compositions, articles with a length over 40 cm were obtained. In the cases of Comparative Compositions where the polymer was P11 and P13, no blow molded articles could be obtained at all.

Example 3 :

A composition (referred to below as Comparative Composition A) comprising 98.2% of P2 and 1.8% of comparative fiber CF1 was prepared and blow molded at a melt temperature of 230°C : the measured sag ratio compared to that obtained for Preferred Composition P2 in Example 1 (referred to below as Preferred Composition B) are shown below in Table 3 :

TABLE 3

| | Comparative Composition A | Preferred Composition B |
|---|---|---|
| PTFE fiber (CF1) weight % | 1.8 | 0 |
| aramid short fiber weight % | 0 | 1.8 |
| SR | 0.60 | 0.83 |

As shown above in Table 3, the replacement of 1.8% of fibrillatable PTFE by 1.8 % of aramid short fibers increased the sag ratio of a polyacetal-based composition from 0.60 to 0.83. Longer blow molded articles were obtained with Preferred Composition B.

Example 4 :

A composition (referred to below as Comparative Composition C) comprising 91 % of P1 and 9 % of comparative fiber CF2 was prepared and blow molded at a melt temperature of 230°C : the measured sag ratio compared to that obtained for Preferred Composition P1 in Example 1 (referred to below as Preferred Composition D) are shown below in Table 4:

TABLE 4

|  | Comparative Composition C | Preferred Composition D |
|---|---|---|
| aramid "floc" (CF2) weight % | 1.8 | 0 |
| aramid short fiber weight % | 0 | 1.8 |
| SR | 0.56 | 0.73 |

As shown above in Table 4, the replacement of 1.8% of aramid "floc" by 1.8 % of aramid short fibers increased the sag ratio of a polyester-based composition from 0.56 to 0.73. Longer blow molded articles were obtained with Preferred Composition D.

Example 5 :

A composition comprising 100% of thermoplastic polyurethane was prepared : at a melt temperature of 200 °C, it was not possible to obtain blow molded articles. A composition comprising 85% of polyurethane and 15% of masterbatch M was prepared. The measured sag ratio, at the same melt temperature of 200°C, was : 0.89. Long blow molded articles were obtained.

Example 6 :

A composition comprising 50% of P14 and 50% of P15 was prepared : this composition comprised therefore 17.5% of glass fibers but no short aramid fibers. The measured sag ratio, at a melt temperature of 270°C, was 0.31 and it was not possible to obtain blow molded articles. A composition comprising 48.5% of P14, 48.5% of P15 and 3% of masterbatch M was prepared. The measured sag ratio, at the same melt temperature of 270°C, was 0.47 and blow molded articles of a length of 40 cm were obtained.

**Claims**

1. A solidified hollow article made from at least one thermoplastic composition, said thermoplastic composition comprising:

    (A) a thermoplastic polymeric matrix, and
    (B) short aramid fibers having a diameter of less than or equal to 150 microns, an average length distribution of 0.1 to 8 mm, and a Canadian Standard Freeness of less than or equal to 500 ml.

2. The article of claim 1, wherein the short aramid fibers have an average length distribution of 0.7 to 3 mm.

3. The article of claim 1, wherein the short aramid fibers have a Canadian Standard Freeness of less than or equal to 400 ml.

4. The article according to any of the preceding claims, wherein the short aramid fibers are fibrillated.

5. The article according to any of the preceding claims, wherein the short aramid fibers are para-aramid fibers.

6. The article according to any of the preceding claims, wherein the short aramid fibers have a surface area greater than, or equal to, 3 m$^2$/g, preferably greater than or equal to, 6 m$^2$/g.

7. The article according to any of the preceding claims, wherein the short aramid fibers are present in an amount of 0.01 weight % to 30 weight %, preferably of 0.1 weight % to 25 weight %, more preferably of 1 weight % to 20 weight %, relative to the weight of the article.

8. The article according to any of the preceding claims, wherein the thermoplastic polymeric matrix comprises at least one thermoplastic polymer including homopolymers, copolymers and terpolymers of polyacetals, polyamides, polyesters, polyurethanes, polyethylene terephthalate glycols, polycarbonates, polyvinyl chlorides, polyacrylates, poly (phenylene ethers), polysulfones, polyolefins, polystyrenes, ethylene tetrafluoroethylene, copolymers of esters and ethers, copolymers of styrene and acrylonitrile, copolymers of acrylonitrile butadiene styrene, blends of polypropylene and ethylene propylene diene monomer, rubber modified thermoplastic polymers, and mixtures or blends thereof.

9. The article of claim 8, wherein the thermoplastic polymer includes homopolymers and copolymers of polyacetals, polyamides, polyesters, polyolefins and mixtures or blend thereof.

10. A process for making a solidified hollow article comprising the steps of:

   providing at least one thermoplastic composition comprising a thermoplastic polymeric matrix and short aramid fibers having a diameter of less than or equal to 150 microns, an average length distribution of 0.1 to 8 mm, and a Canadian Standard Freeness of less than or equal to 500 ml; and
   forming a solidified hollow article from the thermoplastic composition.

11. The article according to any of claims 1 to 9, wherein this article includes tubes, bottles, pipes, containers, bellows, air-springs.

12. The article of claim 1, wherein the article is a blow molded article.

13. The article of claim 1, wherein the article is a solid preform.


**Patentansprüche**

1. Verfestigter Hohlkörper, hergestellt aus mindestens einer thermoplastischen Zusammensetzung, wobei die thermoplastische Zusammensetzung aufweist:

   (A) eine thermoplastische Polymermatrix und
   (B) kurze Aramidfasern mit einem Durchmesser von weniger als oder gleich 150 Mikrometer und einer mittleren Längenverteilung von 0,1 bis 8 mm und einem Entwässerungsgrad nach Kanadischem Standard (Canadian Standard Freeness) von weniger als oder gleich 500 ml.

2. Körper nach Anspruch 1, worin die kurzen Aramidfasern eine mittlere Längenverteilung von 0,7 bis 3 mm haben.

3. Körper nach Anspruch 1, worin die kurzen Aramidfasem einen Entwässerungsgrad nach Kanadischem Standard von weniger als oder gleich 400 ml haben.

4. Körper nach einem der vorgenannten Ansprüche, worin die kurzen Aramidfasern fibrilliert sind.

5. Körper nach einem der vorgenannten Ansprüche, worin die kurzen Aramidfasern Paraaramidfasern sind.

6. Körper nach einem der vorgenannten Ansprüche, worin die kurzen Aramidfasern eine Oberfläche von größer als oder gleich 3 m$^2$/g und vorzugsweise von größer als oder gleich 6 m$^2$/g haben.

7. Körper nach einem der vorgenannten Ansprüche, worin die kurzen Aramidfasern in einer Menge von 0,01% bis 30 Gewichtsprozent vorliegen und vorzugsweise 0,1 % bis 25 Gewichtsprozent und mehr bevorzugt 1% bis 20 Gewichtsprozent in Bezug auf das Gewicht des Körpers.

**8.** Körper nach einem der vorgenannten Ansprüche, worin die thermoplastische Polymermatrix mindestens ein thermoplastisches Polymer aufweist, einschließend Homopolymer, Copolymere und Terpolymere von Polyacetalen, Polyamiden, Polyestern, Polyurethanen, Polyethylenterephthalatglykolen, Polycarbonaten, Polyvinylchloriden, Polyacrylaten, Poly(phenylenethern), Polysulfonen, Polyolefinen, Polystyrolen, Ethylen, Tetrafluorethylen, Copolymeren von Ethem und Estern, Copolymeren von Styrol und Acrylnitril, Copolymeren von Acrylnitril, Butadien, Styrol, Blends von Polypropylen und Ethylen-, Propylen-, Dien-Monomer, mit Kautschuk modifizierten thermoplastischen Polymeren und Mischungen oder Blends davon.

**9.** Körper nach Anspruch 8, worin das thermoplastische Polymer Homopolymere einschließt und Copolymere von Polyacetalen, Polyamiden, Polyester, Polyolefinen und Mischungen oder Blends davon.

**10.** Verfahren zum Herstellen eines verfestigten Hohlkörpers, umfassend die Schritte:

Bereitstellen mindestens einer thermoplastischen Zusammensetzung, die eine thermoplastische Polymermatrix aufweist, sowie kurze Aramidfasern mit einem Durchmesser von weniger als oder gleich 150 Mikrometer und einer mittleren Längenverteilung von 0,1 bis 8 mm und einem Entwässerungsgrad nach Kanadischem Standard von weniger als oder gleich 500 ml, und
Formen eines verfestigten Hohlkörpers aus der thermoplastischen Zusammensetzung.

**11.** Körper nach einem der Ansprüche 1 bis 9, wobei in diesen Körper einbezogen sind: Schläuche, Flaschen, Rohre, Behälter, Faltenrohre, Luftfederbalge.

**12.** Körper nach Anspruch 1, wobei der Körper ein Blasformartikel ist.

**13.** Körper nach Anspruch 1, wobei der Körper eine massiver Vorformling ist.

**Revendications**

**1.** Article creux solidifié fabriqué à partir d'au moins une composition thermoplastique, ladite composition thermoplastique comprenant:

(A) une matrice polymère thermoplastique, et
(B) des fibres courtes d'aramide possédant un diamètre inférieur ou égal à 150 microns, une distribution de longueur moyenne de 0,1 à 8 mm et une égouttabilité de norme canadienne inférieure ou égale à 500 ml.

**2.** Article suivant la revendication 1, dans lequel les fibres courtes d'aramide possèdent une distribution de longueur moyenne de 0,7 à 3 mm.

**3.** Article suivant la revendication 1, dans lequel les fibres courtes d'aramide possèdent une égouttabilité de norme canadienne inférieure ou égale à 400 ml.

**4.** Article suivant l'une quelconque des revendications précédentes, dans lequel les fibres courtes d'aramide sont fibrillées.

**5.** Article suivant l'une quelconque des revendications précédentes, dans lequel les fibres courtes d'aramide sont des fibres de para-aramide.

**6.** Article suivant l'une quelconque des revendications précédentes, dans lequel les fibres courtes d'aramide possèdent une surface spécifique supérieure, ou égale, à 3 $m^2$/g, de préférence supérieure, ou égale, à 6 $m^2$/g.

**7.** Article suivant l'une quelconque des revendications précédentes, dans lequel les fibres courtes d'aramide sont présentes dans une quantité de 0,01% en poids à 30% en poids, de préférence de 0,1% en poids à 25% en poids, plus préférablement de 1% en poids à 20% en poids, relativement au poids de l'article.

**8.** Article suivant l'une quelconque des revendications précédentes, dans lequel la matrice polymère thermoplastique comprend au moins un polymère thermoplastique incluant des homopolymères, des copolymères et des terpolymères de polyacétals, de polyamides, de polyesters, de polyuréthanes, de polyéthylène téréphtalate glycols, de polycarbonates, de polyvinylchlorures, de polyacrylates, de poly(phénylène éthers), de polysulfones, de polyoléfines, de polystyrènes, d'éthylène, de tétrafluoroéthylène, des copolymères d'esters et d'éthers, des copolymères de styrène et d'acrylonitrile, des copolymères d'acrylonitrile-butadiène-styrène, des mélanges de polypropylène et de monomère d'éthylène-propylène-diène, des polymères thermoplastiques modifiés par un caoutchouc et des mixtures ou des mélanges de ceux-ci.

9. Article suivant la revendication 8, dans lequel le polymère thermoplastique inclut des homopolymères et des copolymères de polyacétals, de polyamides, de polyesters, de polyoléfines et des mixtures ou des mélanges de ceux-ci.

10. Procédé pour la fabrication d'un article creux solidifié comprenant les étapes:

de fourniture d'au moins une composition thermoplastique comprenant une matrice polymère thermoplastique et des fibres courtes d'aramide possédant un diamètre inférieur ou égal à 150 microns, une distribution de longueur moyenne de 0,1 à 8 mm et une égouttabilité de norme canadienne inférieure ou égale à 500 ml; et de formation d'un article creux solidifié à partir de la composition thermoplastique.

11. Article suivant l'une quelconque des revendications 1 à 9 où cet article inclut des tubes, des bouteilles, des tuyaux, des récipients, des soufflets, des suspensions pneumatiques.

12. Article suivant la revendication 1, où l'article est un article moulé par soufflage.

13. Article suivant la revendication 1, où l'article est une préforme solide.